# EUROPÄISCHE PATENTSCHRIFT

(11) **EP 3 434 514 B1**
(45) Veröffentlichungstag und Bekanntmachung des Hinweises auf die Patenterteilung: **04.12.2019**
(21) Anmeldenummer: 18182558.9
(22) Anmeldetag: 10.07.2018
(51) Int. Cl.: B60N 3/10

(54) **GETRÄNKEHALTER**
DRINKS HOLDER
PORTE-BOISSON

(30) Priorität: 24.07.2017 DE 102017116629
(43) Veröffentlichungstag der Anmeldung: 30.01.2019
(73) Patentinhaber: Dr. Schneider Kunststoffwerke GmbH, 96317 Kronach Bayern (DE)
(72) Erfinder: ENDRES, Gerhard, 95336 Mainleus (DE)

(56) Entgegenhaltungen:
- EP-A1- 2 960 110
- DE-A1- 10 101 642
- JP-A- 2016 060 316
- US-A1- 2012 248 106

## Beschreibung

Es wird ein Getränkehalter beschrieben, der aus einer Ruhestellung in eine Gebrauchsstellung überführbar ist, wobei der Haltebereich in der Gebrauchsstellung gegenüber der Ruhestellung vergrößert ist.

Getränkehalter dienen zur Aufnahme von Getränkebehältern, wie beispielsweise Getränkedosen, Flaschen oder Becher. Vor allem in Kraftfahrzeugen gibt es zur Aufnahme von Getränkebehältern verschiedene Vorrichtungen. Damit auch Getränkebehälter mit einer relativ großen Höhe sicher gehalten werden können und kein Umkippen erfolgt, sind die Getränkehalter entsprechend dimensioniert und ausgebildet. Die Getränkehalter benötigen daher einen großen Bauraum oder ragen verhältnismäßig weit in den Fahrgastraum hinein.

Solche Getränkehalter, die auch als Cupholder bezeichnet werden, können zudem Temperiereinrichtungen aufweisen, die es ermöglichen ein in einem Getränkebehälter aufgenommenes Getränk zu erwärmen oder kühl zu halten. Hierzu sind verschieden Einrichtungen aus dem Stand der Technik bekannt.

### Stand der Technik

Es ist bereits vorgeschlagen worden, Getränkehalter anzugeben, die aus einer Ruhestellung in eine Gebrauchsstellung überführbar sind, wobei der Haltebereich in der Gebrauchsstellung deutlich größer als in einer Ruhestellung ist. Hierzu können beispielsweise teleskopierbare Elemente verschoben und anschließend arretiert werden. Darüber hinaus ist es bereits vorgeschlagen worden, hülsen- oder rohrartige Elemente zu verdrehen, um einen vergrößerten Aufnahmeraum bzw. Haltebereich bereitzustellen.

Aus DE 101 016 42 A1 ist beispielsweise ein Fahrzeughalter für Flüssigkeitsbehälter bekannt, der drei zylindrische Abschnitte aufweist, die teleskopierbar in Richtung der Längsachse verschiebbar miteinander verbunden und zueinander fixierbar sind. Die drei Abschnitte bilden zylinderförmige Elemente mit zunehmendem Durchmesser. Das Element mit dem geringsten Durchmesser weist einen abstehenden Zapfen auf, der in einer Führung eines größeren Elements aufgenommen ist. Das größere Element weist neben der Führung einen weiteren Zapfen auf, der in einer weiteren Führung eines noch größeren Elements aufgenommen ist. Zur Höhenveränderung werden die Elemente auseinander gezogen und danach verdreht, so dass die Zapfen in senkrecht zur Auszugsrichtung verlaufenden Abschnitten der Führungen aufgenommen werden.

EP 2 960 110 A1 offenbart einen höhenverstellbaren Cupholder, wobei eine Hülse ein Gewinde aufweist und in einer entsprechenden Aufnahme mit einem korrespondierenden Gewinde höhenverstellbar aufgenommen ist. Über ein Verdrehen der Hülse kann eine Vergrößerung des Aufnahmeraums bereitgestellt werden.

EP 0 919 431 A1 offenbart eine Verschlussklappe eines Handschuhkastens mit einem Cupholder, der aus einem feststehenden Ring und einem dazu über eine Kulissenführung verdrehbaren Ring besteht.

EP 1 754 625 A2 offenbart eine Vorrichtung zum Halten von Getränkedosen mit einer Hülse, die in einer weiteren Hülse über ein Gewinde verdrehbar aufgenommen ist.

Die aus dem Stand der Technik bekannten Vorrichtungen weisen jedoch verschiedene Nachteile auf. Sämtlichen aus dem Stand der Technik bekannten Cupholdern ist es gemein, dass diese einen relativ großen Bauraum in ihrer Ruhestellung aufweisen. Vor allem im Bereich der Mittelkonsole ist nur wenig Bauraum für solche Halter vorhanden, so dass nur kleine Getränke über darin angeordnete Cupholder sicher gehalten werden können. Cupholder mit einer geringen Höhe in einer Ruhestellung weisen auch in der Gebrauchsstellung nur eine geringe Höhe eines Haltebereichs bzw. Aufnahmeraums auf. Darüber hinaus ergibt sich bei einer teleskopierbaren Ausführung dreier Hülsen eine schrittweise Verkleinerung des Durchmessers des Haltebereichs bzw. Aufnahmeraums durch die hülsenartigen Elemente.

### Aufgabe

Demgegenüber besteht die Aufgabe darin, einen Getränkehalter anzugeben, der in der Gebrauchsstellung einen größeren Haltebereich aufweist als in der Ruhestellung und wobei die Kinematik zum Verbringen des Getränkehalters aus einer Ruhestellung in eine Gebrauchsstellung und umgekehrt einfach ausgebildet ist und die Anforderungen an den Bauraum reduziert sind. Zusätzlich soll eine alternative Lösung zu den aus dem Stand der Technik bekannten Getränkehaltern angegeben werden.

### Lösung

Die vorstehend genannte Aufgabe wird durch einen Getränkehalter gelöst, aufweisend ein erstes zylinderförmiges Element, welches an seiner Innenwand und an seiner Außenwand eine gewindeartige Führung aufweist, ein zweites zylinderförmiges Element, welches eine mit einer der gewindeartigen Führungen des ersten Elements korrespondierende gewindeartige Führung aufweist, und ein drittes zylinderförmiges Element, welches eine mit der anderen gewindeartigen Führung des ersten Elements korrespondierende gewindeartige Führung aufweist, wobei
- das zweite Element und das dritte Element über die gewindeartigen Führungen relativ zu dem ersten Element um eine gemeinsame Drehachse verdrehbar sind,
- das zweite Element und das dritte Element über eine Koppeleinrichtung derart miteinander gekoppelt sind, dass das zweite Element und das dritte Element gemeinsam in der gleichen Richtung um die gemeinsame Drehachse verdrehbar sind,
- die Position des zweiten Elements und des dritten Elements zueinander über die Koppeleinrichtung fest definiert ist.

Die Kinematik des Getränkehalters ist einfach aufgebaut und ermöglicht durch ein Verdrehen in einer Richtung eine Verlagerung des zweiten Elements, beispielsweise nach oben, und des dritten Elements nach unten. Dementsprechend ragt das zweite Element in der ausgefahrenen Gebrauchsstellung beispielsweise von einer den Getränkehalter umgebenden Oberfläche ab, wobei das dritte Element, welches zusätzlich den Haltebereich vergrößert, "unsichtbar" nach unten verlagert wird. Durch die Kopplung des zweiten Elements mit dem dritten Element über die gewindeartigen Führungen sind auch keine komplexen Verstellkinematiken erforderlich. Zudem wird auf eine Umkehr einer Bewegungsrichtung verzichtet, was den Aufbau des Getränkehalters zusätzlich vereinfacht. Der Getränkehalter benötigt daher wenig Bauraum, wobei zusätzlich lediglich die Verlagerung des dritten Elements nach unten berücksichtigt werden muss. Vorteilhafterweise ragt der Getränkehalter in der ausgefahrenen Gebrauchsstellung nur über das zweite Element über eine den Getränkehalter umgebende Oberfläche hinaus.

Das zweite Element kann an seiner Außenwand eine mit der gewindeartigen Führung an der Innenwand des ersten Elements korrespondierende gewindeartige Führung und das dritte Element kann an seiner Innenwand eine mit der gewindeartigen Führung an der Außenwand des ersten Elements korrespondierende gewindeartige Führung aufweisen. In einer solchen Ausführungsform befindet sich das zweite Element in der Ruhestellung in dem ersten Element und das dritte Element umgibt das zweite Element von außen. In weiteren Ausführungsformen kann jedoch die Ausbildung auch umgekehrt erfolgen, wobei das dritte Element in der Ruhestellung innerhalb des ersten Elements angeordnet ist und das zweite Element das erste Element von außen umgibt.

Die gewindeartigen Führungen und die damit korrespondierenden Führungen an den anderen Elementen können beispielsweise durch Führungsnuten und abstehende Gewindegänge gebildet werden. In weiteren Ausführungsformen können auch andere als in der nachfolgenden Figurenbeschreibung gezeigten gewindeartigen Führungen vorgesehen sein, wobei die Führungen stets so ausgebildet sind, dass eine Vergrößerung des Aufnahmeraums bzw. des Haltebereichs über eine Verlagerung des zweiten Elements und des dritten Elements entlang der Drehachse nach oben und unten erfolgt. Die Steigung des Gewindes kann dabei auch festlegen, in wie weit, in Abhängigkeit der Dimensionierung und Ausbildung der ersten, zweiten und dritten Elemente, eine Verlagerung nach oben und unten erfolgt. Dabei kann über die Gewindesteigungen die Vergrößerung des Haltebereichs definiert werden.

Das zweite Element kann einen umlaufenden Rand aufweisen, über den das zweite Element in einer Endstellung auf dem ersten Element aufliegt. Hierüber kann eine Begrenzung der Verlagerung des zweiten Elements relativ zu dem ersten Element und damit auch eine Begrenzung der Verlagerung des dritten Elements zu dem ersten Element erfolgen, da das zweite Element und das dritte Element miteinander gekoppelt sind. Ein Überdrehen und damit ein Herausdrehen von Elementen werden hierüber verhindert, ohne dass Anschläge oder andere Begrenzungsvorrichtungen erforderlich sind.

Die Koppeleinrichtung kann mindestens ein Koppelelement aufweisen, welches sich parallel zur Drehachse des ersten, zweiten und dritten Elements erstreckt, wobei das mindestens eine Koppelelement mit dem zweiten Element verbunden ist. Beispielsweise ist das mindestens eine Koppelelement in eine Öffnung im umlaufenden Rand des zweiten Elements eingesetzt und ragt nach unten. In weiteren Ausführungsformen weist die Koppeleinrichtung drei Koppelelemente auf, die sich gleichmäßig über den umlaufendenden Rand des zweiten Elements erstrecken. Die Koppelelemente können beispielsweise einen Basisabschnitt und daran angeordnete nach unten ragende Koppelabschnitte aufweisen. Über die Basisabschnitte können die Koppelelemente sicher am umlaufenden Rand des zweiten Elements gehalten werden, ohne dass diese durchrutschen.

Das dritte Element kann ferner mindestens eine Öffnung aufweisen, in welcher ein Koppelelement der Koppeleinrichtung verschiebbar geführt ist. Beispielsweise weist das dritte Element einen umlaufenden Rand auf, der entsprechend der Anordnung und Anzahl der Koppelelemente korrespondierende Öffnungen oder Ausnehmungen aufweist, in welchen Koppelabschnitte der Koppelelemente verschiebbar aufgenommen sind. Wird der Getränkehalter aus seiner Ruhestellung in die Gebrauchsstellung überführt, gleiten die Koppelelemente zusammen mit dem zweiten Element über die Koppelabschnitte entlang der Öffnungen des dritten Elements nach oben, wobei die Koppelabschnitte am Rand der Öffnungen des dritten Elements anliegen und damit ein Mitdrehen des dritten Elements bewirken. Wird der Getränkehalter aus seiner Gebrauchsstellung wieder in seine Ruhestellung überführt, so führen die Koppelabschnitte das dritte Element ebenfalls wieder mit, jedoch in der entgegengesetzten Richtung, wobei die Koppelelemente über die Koppelabschnitte in den Öffnungen nach unten gleiten.

Der Getränkehalter kann zusätzlich ein Gehäuse mit einer Öffnung aufweisen, in welcher das erste Element eingesetzt und verdrehfest mit dem Gehäuse verbunden ist. Das erste Element wird bei der Verlagerung des Getränkehalters aus seiner Ruhestellung in die Gebrauchsstellung und umgekehrt nicht bewegt. Lediglich das zweite Element und das dritte Element sowie die Koppeleinrichtung und gegebenenfalls weitere damit verbundene Vorrichtungen werden bei der Verlagerung bewegt.

Das erste Element kann mindestens ein radial nach außen ragendes Halteelement aufweisen, das in mindestens einer korrespondierenden Öffnung in einer die Öffnung des Gehäuses umgebenden Wand aufgenommen ist. Das radial nach außen ragende Halteelement dient dabei sowohl zur sicheren Befestigung des ersten Elements an dem Gehäuse als auch zur Begrenzung der Drehbewegung. In einer Ausführungsform weist das erste Element drei radial nach außen ragende Halteelemente auf, die gleichmäßig verteilt am Umfang des ersten Elements angeordnet sind. Zwischen zwei Halteelementen wird dann der maximale Verdrehweg des Getränkehalters definiert, wobei ein Koppelelement der Koppeleinrichtung in der Ruhestellung an einem Halteelement und in der Gebrauchsstellung an einem benachbarten Halteelement anliegt.

In solchen Ausführungen kann ein Koppelabschnitt des mindestens einen Koppelelements im eingefahrenen Zustand des zweiten Elements und des dritten Elements zwischen der Außenwand des dritten Elements und der die Öffnung des Gehäuses umgebenden Wand angeordnet sein. Im ausgefahrenen Zustand verändert sich die Anordnung des mindestens einen Koppelelements zu der Wand nicht, jedoch befinden sich das zweite und das dritte Element in einem größeren Abstand zueinander, wobei die Kopplung nur noch über den unteren Abschnitt des mindestens einen Koppelelements erfolgt.

Das Gehäuse kann eine umlaufende Rinne aufweisen, die zwischen der die Öffnung des Gehäuses umgebenden Wand und einer beabstandet hierzu sich erstreckenden Wand gebildet ist. In dieser Rinne kann eine umlaufende Wand eines zusätzlichen Bedienelements im vollständig eingefahrenen Zustand aufliegen. Die Rinne kann zusätzlich als Sammelrinne zum Auffangen von Feuchtigkeit und Schmutz dienen. Beispielsweise kann austretende Flüssigkeit über eine solche Sammelrinne gesammelt und über eine weitere Ableiteinrichtung nach außen, zu einem Behälter oder einer anderen Einrichtung, geführt werden. Die Rinne schützt die Kinematik und die Komponenten des Getränkehalters vor Beschädigung und Verschmutzung und schützt zudem Personen vor Verletzungen.

Das dritte Element kann zusätzlich einen Boden aufweisen, über den Getränkebehälter abgestützt werden. Zusätzlich kann ein Einsatz, wie beispielsweise eine gummiartige Schale im dritten Element eingesetzt sein. Ferner kann das zweite Element verdrehfest mit einem Bedienelement verbunden sein, welches an seiner äußeren Oberfläche mindestens abschnittsweise eine Struktur oder Riffelung aufweist. Hierüber kann das Bedienelement leicht verdreht werden, ohne dass es zu einem Abrutschen der Finger einer Bedienperson kommt.

Die Weite, um welche das zweite Element und das dritte Element nach oben bzw. unten verlagerbar sind, wird auch über den Abstand der Halteelemente definiert. Im Zusammenspiel mit der Steigung der gewindeartigen Führungen sowie der Dimensionierung des ersten Elements, des zweiten Elements und des dritten Elements lassen sich hierbei verschiedene Höhen des Haltebereichs in der Gebrauchsstellung definieren.

Zusätzlich können die einzelnen Elemente Mittel zur Erhöhung der Reibung aufweisen, welche eine sichere Aufnahme von Getränkebehältern ermöglichen. Zudem können federnde Elemente vorgesehen sein, welche beispielsweise eine Verkleinerung des Öffnungsquerschnitts bzw. der Aufnahmeweite des Getränkehalters ermöglichen. Zudem kann der Getränkehalter mit Einrichtungen zur Temperierung der hierin aufgenommenen Getränkebehälter vorgesehen sein. Der Getränkehalter kann einfach manuell verstellt werden, um einen vergrößerten Aufnahmebereich bereitzustellen. In weiteren Ausführungsformen kann das Verdrehen auch über einen Antrieb erfolgen, der beispielsweise elektrisch angesteuert wird. Hierzu kann eines der drehbaren Elemente mit einem Stellantrieb oder einem Elektromotor gekoppelt sein, wobei über die Kopplung des zweiten Elements mit dem dritten Element automatisch eine entsprechende Bewegung, wie bereits vorstehend beschrieben, erreicht wird.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Figuren

In den Zeichnungen zeigt:
- Fig. 1: eine perspektivische Darstellung eines Getränkehalters;
- Fig. 2: eine Explosionszeichnung des Getränkehalters von Fig. 1;
- Fig. 3: verschiedene Ansichten eines Bedienelements des Getränkehalters von Fig. 1;
- Fig. 4: verschiedene Ansichten einer Koppeleinrichtung des Getränkehalters von Fig. 1;
- Fig. 5: verschiedene Ansichten eines zweiten zylinderförmigen Elements des Getränkehalters von Fig. 1;
- Fig. 6: verschiedene Ansichten eines ersten zylinderförmigen Elementes des Getränkehalters von Fig. 1;
- Fig. 7: eine Schnittansicht durch ein Gehäuseteil des Getränkehalters von Fig. 1;
- Fig. 8: verschiedene Ansichten eines dritten zylinderförmigen Elements des Getränkehalters von Fig. 1; und
- Fig. 9: eine Schnittansicht durch den Getränkehalter von Fig. 1.

In den Zeichnungen mit gleichen Bezugszeichen versehene Komponenten entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind.

### Ausführliche Beschreibung eines Ausführungsbeispiels

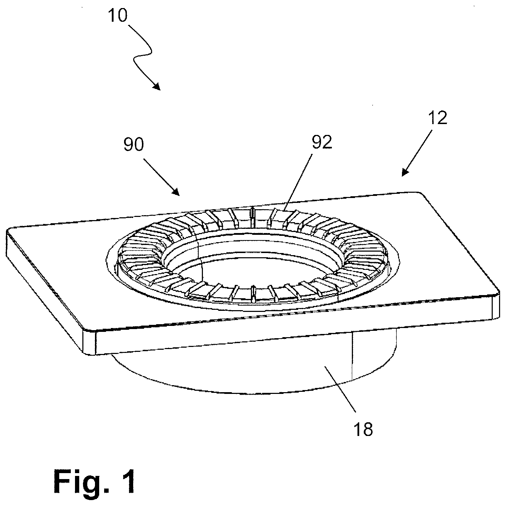

Fig. 1 zeigt eine perspektivische Darstellung eines Getränkehalters 10. Der Getränkehalter 10 kann beispielsweise im Bereich einer Mittelkonsole eines Fahrzeugs angeordnet sein. Im Bereich der Mittelkonsole steht wenig Bauraum zur Verfügung, so dass der Getränkehalter 10 verdrehbar ausgebildet ist, um den Aufnahmeraum für Getränkebehälter zu vergrößern. Die Vergrößerung des Aufnahmeraums wird dabei erreicht, ohne dass viel Bauraum benötigt wird. Über den Getränkehalter 10 können Getränkebehälter, wie Flaschen, Dosen oder Becher sicher gehalten werden. Zusätzlich kann eine Temperiereinrichtung vorgesehen sein, die ein Erwärmen bzw. Warmhalten oder Kühlen bzw. Kühlhalten eines in einem Getränkebehälter aufgenommenen Getränks bereitstellt. Die Temperierung kann in Kombination mit Messeinrichtungen, wie beispielsweise Thermometern, oder unabhängig davon erfolgen. In weiteren Ausführungsformen kann auch eine bestimmte Temperatur, beispielsweise über eine Steuereinheit, eingestellt werden.

Der Getränkehalter 10 der hierin beschriebenen Ausführungsform wird manuell von seiner Ruhestellung in die Gebrauchsstellung und umgekehrt verbracht. In weiteren nicht beschriebenen Ausführungsformen kann jedoch auch ein Verfahren über einen gesonderten Antrieb erfolgen. Hierzu kann beispielsweise ein Elektromotor vorgesehen sein, der mit einem der drehbaren Elemente gekoppelt ist.

Der in Fig. 1 gezeigte Getränkehalter 10 weist ein Gehäuse 12 auf. Das Gehäuse 12 ist Teil einer Mittelkonsole eines Fahrzeugs. Das Gehäuse 12 kann beispielsweise in die Mittelkonsole eingebaut, eingesetzt oder ein Teil dieser sein, wobei lediglich die weiteren Komponenten mit dem Teil der Mittelkonsole verbunden werden. In weiteren Ausführungsformen kann auch die Oberfläche bzw. eine Dekorschicht einer Mittelkonsole das Gehäuse 12 überdecken, sodass lediglich die bewegbaren Komponenten, wie beispielsweise der Bedienring 90 und die dazwischen definierte Öffnung zur Aufnahme von Getränkebehältern zugänglich sind.

In der Darstellung von Fig. 1 ist ein Bedienelement 90 sichtbar, welches an seiner äußeren Oberfläche eine Riffelung 92 aufweist. Diese Riffelung 92 erleichtert es einer Bedienperson mit dem Finger einer Hand den Getränkehalter 10 zu verdrehen, sodass es zu einem Herausfahren und einer Vergrößerung des Haltebereichs kommt.

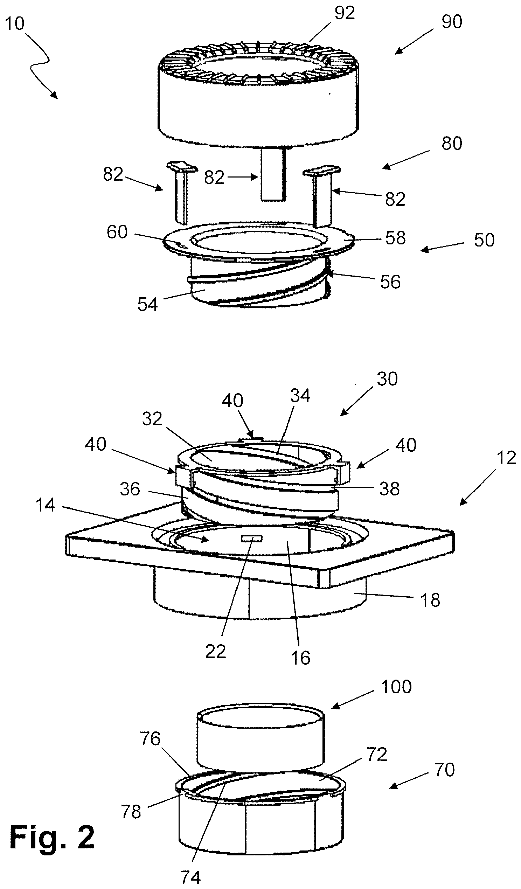

Fig. 2 zeigt eine Explosionszeichnung des Getränkehalters 10 von Fig. 1. Der Getränkehalter 10 der hier gezeigten Ausführungsform weist neben dem Gehäuse 12 und dem Bedienelement 90 ein erstes zylinderförmiges Element 30, ein zweites zylinderförmiges Element 50, ein drittes zylinderförmiges Element 70, eine Koppeleinrichtung 80 sowie einen Einsatz 100 auf.

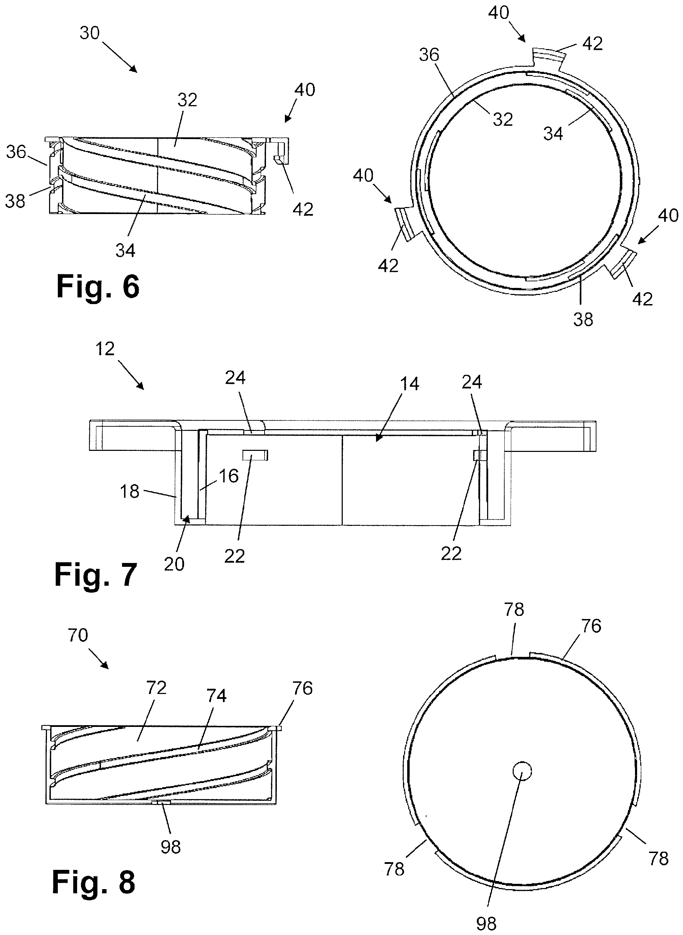

Das Gehäuse 12 weist eine Öffnung 14 auf, in welche das erste Element 30, das zweite Element 50 und das dritte Element 70 mitsamt dem Einsatz 100 in der Ruhestellung aufgenommen sind. Das Bedienelement 90 ist in der Ruhestellung zwischen einer die Öffnung 14 umgebenden Wand 16 und einer diese umgebenden Wand 18 aufgenommen. Die Wände 16 und 18 sind so ausgebildet, dass diese eine Rinne 20 ausbilden. Die Wände 16 und 18 sind hierzu miteinander im unteren Bereich verbunden. Die Wand 16 weist zusätzlich Öffnungen 22 und 24 (siehe hierzu Fig. 7) auf, welche zur Befestigung des ersten Elements 30 über dessen Halteelemente 40 dienen.

Das erste Element 30 weist an seiner Innenwand 32 eine gewindeartige Führung 34 und an seiner Außenwand 36 eine gewindeartige Führung 38 auf. In der Führung 34 ist eine korrespondierende Führung 56 an der Außenwand 54 des zweiten Elements 50 im zusammengebauten Zustand des Getränkehalters 10 aufgenommen. Das zweite Element 50 weist zudem einen umlaufenden Rand 58 mit drei Öffnungen 60 auf. Die Öffnungen 60 erstrecken sich im gleichen Abstand um den Rand 58. In diese Öffnungen 60 sind Koppelabschnitte 86 von Koppelelementen 82 aufgenommen. Diese ragen nach unten und sind in den Öffnungen 78 des dritten Elements 70 aufgenommen. Das dritte Element 70 weist an der Innenwand 72 eine gewindeartige Führung 74 auf, welche in die Führung 38 des ersten Elements eingreift. Die Öffnungen 78 erstrecken sich um einen Rand 76 des dritten Elements 70, wobei die Weite der Öffnungen 78 im Wesentlichen der Breite der Koppelabschnitte 86 entspricht, sodass beim Verdrehen des zweiten Elements 50 automatisch ein Drehen des dritten Elements 70 in der gleichen Richtung erfolgt. Die Koppelabschnitte 86 werden beim Verdrehen des zweiten Elements 50 und des dritten Elements 70 entlang deren Längsachse in den Öffnungen 78 verlagert.

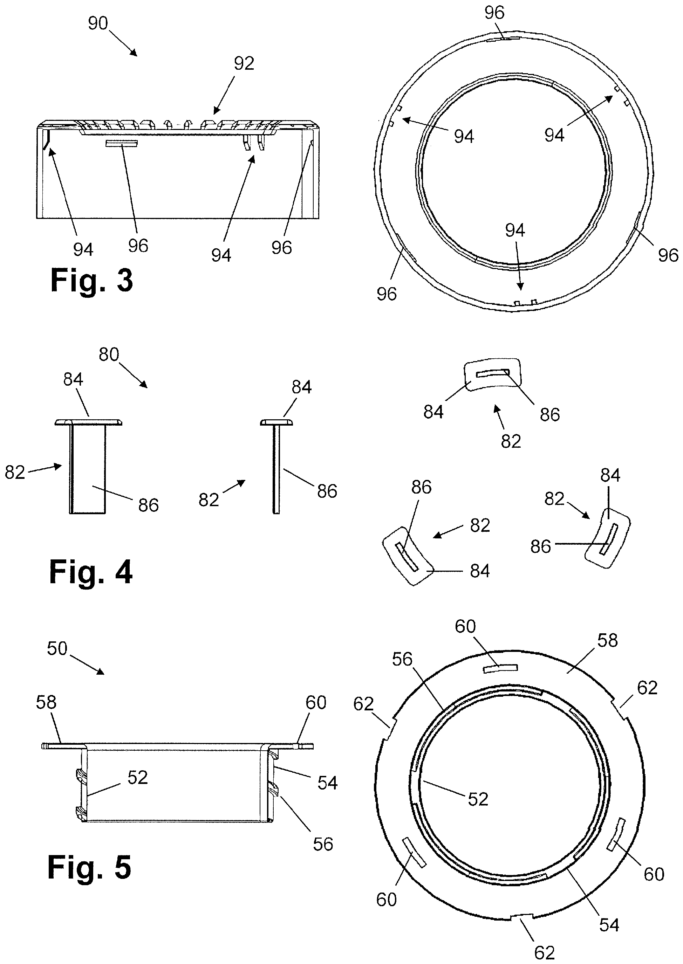

Das Bedienelement 90 ist über in Fig. 3 gezeigte Vorsprünge 94 und Rastelemente 96 fest mit dem zweiten Element 50 verbunden, sodass ein Verdrehen des Bedienelements 90 zu einem Verdrehen des zweiten Elements 50 führt. Über die Kopplung mit dem dritten Element 70 über die Koppeleinrichtung 80 erfolgt zugleich ein Verdrehen des dritten Elements 70 in der gleichen Richtung, wenn das zweite Element 50 bzw. das Bedienelement 90 verdreht werden.

Der maximale Verdrehweg des Bedienelements 90 sowie des zweiten Elements 50 werden über die Koppelelemente 82 definiert, die zwischen den Halteelementen 40 verfahren werden können. Liegen die Koppelelemente 82 an einer Seite an einem entsprechenden Halteelement 40 an, befindet sich der Getränkehalter 10 in seiner Ruhestellung. Wird nun der Getränkehalter 10 über das Bedienelement 90 verdreht, werden die Koppelelemente 82 soweit verdreht, bis diese an der anderen Kante an einem zweiten Halteelement 40 anliegen. Der Verdrehweg des Bedienelements 90 sowie der Elemente 50 und 70 ist damit fest definiert. Ein Herausdrehen der Elemente 50 und 70 wird dadurch verhindert. Zudem ergibt sich ein leichter Zusammenbau, da die Komponenten, wie aus der Darstellung von Fig. 2 ersichtlich, einfach ineinander eingesetzt werden können. Zum Schluss werden die Halteelemente 82 über die Öffnungen 60 in die Öffnungen 78 eingeschoben. Danach wird das Bedienelement 90 aufgesetzt und mit dem umlaufenden Rand 58 verrastet, sodass die Position der Elemente 50 und 70 zueinander fest definiert ist und ein Herausgleiten der Koppelelemente 82 verhindert wird.

Fig. 3 zeigt verschiedene Ansichten des Bedienelements 90 des Getränkehalters 10 von Fig. 1. Die linke Darstellung zeigt einen Schnitt durch das Bedienelement 90 und die rechte Darstellung zeigt eine Ansicht von unten auf das Bedienelement 90. Die Vorsprünge 94 greifen in Öffnungen 62 im Rand 58 des zweiten Elements 50. Die Rastelemente 96 hintergreifen im eingesetzten Zustand den Rand 58, wobei über die Vorsprünge 94 die Position des Bedienelements 90 zu dem zweiten Element 50 festgelegt wird und über die Rastelemente 96 das zweite Element 50 fest mit dem Bedienelement 90 verbunden ist.

Fig. 4 zeigt verschiedene Ansichten der Koppeleinrichtung 80 des Getränkehalters 10 von Fig. 1. Die linke Darstellung zeigt einen Schnitt durch die Koppeleinrichtung 80 und die rechte Darstellung zeigt einen Blick auf die Koppeleinrichtung 80 von unten. Die einzelnen Koppelelemente 82 weisen eine Basis 84 und Koppelabschnitte 86 auf, die sich nach unten erstrecken. Die Koppelabschnitte 86 sind im Wesentlichen so breit, dass diese ohne Spiel in den Öffnungen 78 des dritten Elements 70 aufgenommen sind. Die Koppelabschnitte 86 können jedoch beim Verdrehen und der zwangsläufigen Vergrößerung des Abstands zwischen dem zweiten Element 50 und dem dritten Element 70 entlang den Öffnungen 78 gleiten. Die Basis 84 verhindert nach dem Einsetzen der Koppelabschnitte 86 in die Öffnungen 60 ein Herausrutschen. Das Bedienelement 90 weist im Bereich der Basis 84 eine umlaufende Erhöhung in einem Aufnahmebereich auf, sodass im verrasteten Zustand des Bedienelements 90 mit dem zweiten Element 50 ein ausreichender Platz für die Basis 84 gegeben ist. Die Koppelelemente 82 werden dabei so aufgenommen, dass diese nicht nach oben verlagert werden können.

Fig. 5 zeigt verschiedene Ansichten des zweiten zylinderförmigen Elements 50 des Getränkehalters 10 von Fig. 1. Die linke Darstellung zeigt einen Schnitt durch das zweite Element 50 und die rechte Darstellung zeigt das zweite Element 50 von unten. Das zweite Element 50 weist im Rand 58 Öffnungen 60 auf, die zur Aufnahme der Koppelabschnitte 86 dienen. Zudem weist der Rand 58 Öffnungen 62 auf, die als Positionsöffnungen zur Aufnahme der Vorsprünge 94 ausgebildet sind. Die Innenwand 52 des zweiten Elements 50 ist glatt ausgebildet und kann als Anlagefläche zur Aufnahmefläche von Getränkebehältern dienen. Die Innenwand 52 kann zusätzlich eine Beschichtung oder Elemente aufweisen, die eine sichere Aufnahme von Getränkebehältern bereitstellen.

Fig. 6 zeigt verschiedene Ansichten des ersten zylinderförmigen Elements 30 des Getränkehalters 10 von Fig. 1. Die linke Darstellung von Fig. 6 zeigt das erste Element 30 im Schnitt und die rechte Darstellung zeigt das erste Element 30 von unten. Das erste Element 30 weist an seiner Innenwand 32 eine als Führungsnut ausgebildete gewindeartige Führung 34 und an seiner Außenwand 36 eine als Führungsnut ausgebildete gewindeartige Führung 38 auf. Zudem sind an einem oberen Rand des ersten Elements 30 Halteelemente 40 angeordnet, die im Wesentlichen den gleichen Abstand zueinander aufweisen. Die Halteelemente 40 weisen einen Haken 42 auf, der in die Öffnungen 22 des Gehäuses 12 im eingesetzten Zustand des ersten Elements 30 gereift. Der radial nach außen stehende Abschnitt der Halteelemente 40 ist in Öffnungen 24 in der Wand 16 des Gehäuses 12 aufgenommen. Über die Halteelemente 40 mit den Haken 42 ist das erste Element 30 sowohl bezüglich seiner Position fest zu dem Gehäuse 12 angeordnet als auch gegen eine Verlagerung nach oben und unten, entlang der Drehrichtung, gesichert.

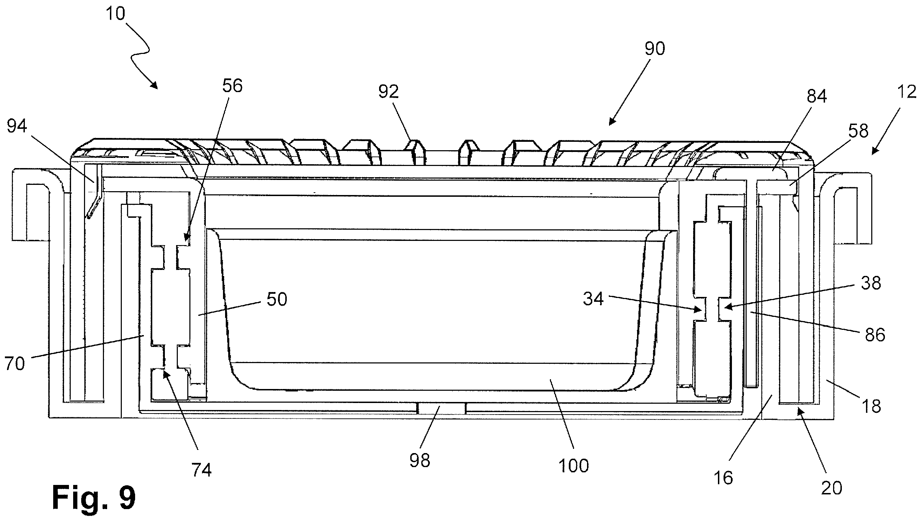

Fig. 7 zeigt eine Schnittansicht durch das Gehäuse 12 des Getränkehalters 10 von Fig. 1. In der Ruhestellung des Getränkehalters 10 befinden sich die Komponenten, wie beispielsweise das zweite Element 50 und das dritte Element 70 in dem Bereich der Öffnung 14 zwischen den Wänden 16. Das dritte Element 70 ragt in diesem Zustand nicht nach unten, sodass ein Getränkehalter 10 mit einer relativ geringen Höhe bereitgestellt wird (siehe hierzu auch Fig. 9).

Fig. 8 zeigt verschiedene Ansichten des dritten zylinderförmigen Elements 70 des Getränkehalters 10 von Fig. 1. Die Darstellung auf der linken Seite zeigt den Schnitt durch das dritte Element 70 und die rechte Darstellung zeigt einen Blick von unten auf das dritte Element 70. Das dritte Element 70 weist einen umlaufenden Rand 76 auf, in dem die Öffnungen 78 für die Aufnahme der Halteabschnitte 86 zur Kopplung mit dem zweiten Element 50 angeordnet sind. Zusätzlich weist das dritte Element 70 eine Öffnung 98 auf. Über die Öffnung 98 kann beispielsweise Feuchtigkeit nach unten abgeführt werden. Feuchtigkeit kann beispielsweise durch austretende Flüssigkeit aus einem Getränkebehälter in das dritte Element 70 gelangen.

Das dritte Element 70 weist eine an der Innenseite 70 angeordnete gewindeartige Führung 74 auf, die in die als Führungsnut ausgebildete gewindeartige Führung 38 des ersten Elements 30 eingreift.

Bei der in den Figuren gezeigten Ausführungsform weist das erste Element 30 Führungsnuten auf, wobei das zweite Element 50 und das dritte Element 70 nach außen ragende Gewindegänge aufweisen. In weiteren Ausführungsformen kann dies jedoch auch umgekehrt ausgebildet sein. Zudem zeigen die in den Figuren gezeigten Darstellungen eine Ausführungsform, wobei das zweite Element 50 einen kleineren Durchmesser aufweist als das erste Element 30 und das dritte Element 70. In weiteren Ausführungsformen kann jedoch auch das dritte Element 70 einen kleineren Durchmesser aufweisen als das erste Element 30 und das zweite Element 50.

Schließlich zeigt Fig. 9 eine Schnittansicht durch den Getränkehalter 10 von Fig. 1. Fig. 9 zeigt den Getränkehalter 10 in einer Ruhestellung. In Fig. 9 ist zusätzlich der Einsatz 100 gezeigt, der beispielsweise als gummiartiger Einsatz ausgebildet sein kann. Der gummiartige Einsatz 100 kann über einen entsprechenden Ansatz an seiner Unterseite über die Öffnung 98 fixiert sein. Die Öffnung 98 kann daher auch als Befestigungs- und Positionshilfe Verwendung finden.

In der Ruhestellung können in den Getränkehalter 10 nur relativ flache Getränkebehälter sicher gehalten werden. Wünscht eine Person einen vergrößerten Haltebereich zu verwenden, so kann über das Bedienelement 90 ein Verdrehen erfolgen. Eine Rotation des Bedienelements 90 bewirkt über die Verbindung mit dem zweiten Element 50 auch ein Verdrehen dessen. Das zweite Element 50 ist über die Koppeleinrichtung 80 mit dem dritten Element 70 bewegungsmäßig gekoppelt, sodass das dritte Element 70 in der gleichen Richtung wie das zweite Element 50 verdreht wird. Dabei erfolgt aufgrund der gewindeartigen Führungen 34, 38, 56 und 74 eine Verlagerung des zweiten Elements 50 nach oben und eine Verlagerung des dritten Elements 70 nach unten. Der Haltebereich bzw. Aufnahmeraum des Getränkehalters 10 wird dabei in Richtung der Drehachse deutlich vergrößert.

Um den Getränkehalter 10 wieder in seine Ruhestellung zu verbringen, wird über das Bedienelement 90 eine Rotation in der entgegengesetzten Richtung ausgelöst, wobei das zweite Element 50 aufgrund der Ausbildung der Führungen 34 und 56 nach unten verfahren wird und über die Kopplung mittels der Koppelelemente 82 das dritte Element 70 über die Führungen 74 und 38 nach oben verfährt bis die in Fig. 9 gezeigte Stellung (Ruhestellung) erreicht ist.

Der hierin beschriebene Getränkehalter 10 ermöglicht unter der Bereitstellung eines geringen benötigten Bauraums und einer geringen Höhe in der Ruhestellung einen Getränkehalter, der in der Gebrauchsstellung einen deutlich vergrößerten Aufnahmeraum aufweist. Zudem wird eine Rotation der beiden Elemente in nur einer Richtung erreicht, was insbesondere auch nicht zu einem entgegensetzten Verdrehen eines bereits eingesetzten Getränkebehälters führen würde. Ein Verdrehen erfolgt daher in Drehrichtung. Über eine Kopplung des Einsatzes 100 mit feststehenden Elementen kann dieser auch nicht mit verdreht werden. In der Regel wird jedoch ein Getränkebehälter mit einer großen Höhe erst dann eingesetzt, wenn die Gebrauchsstellung erreicht wurde. Eine Arretierung der Gebrauchsstellung kann durch einen waagrechten und/oder entgegengesetzt gerichteten Führungsabschnitt bei den Führungen 34, 38, 56 und 74 erreicht werden. Beispielsweise fällt dann der Endbereich einer Führung wieder ab, so dass zwar die Höhe gering minimiert aber ein versehentliches Verdrehen verhindert wird. Weiterhin können die Führungen 34, 38, 56 und 74 so ausgebildet sein, dass eine Selbsthaltung bereitgestellt wird. Die Beweglichkeit wird auch über die Reibung in den Führungen 34, 38, 56 und 74 definiert.

Zudem ist die Kinematik des Getränkehalters 10 einfach ausgebildet. Es ist keine Umkehr einer Bewegungsrichtung für die verschiedenen Komponenten erforderlich und die Kinematik benötigt wenig Bauraum.

### Bezugszeichenliste

- 10: Getränkehalter
- 12: Gehäuse
- 14: Öffnung
- 16: Wand
- 18: Wand
- 20: Rinne
- 22: Öffnung
- 24: Öffnung
- 30: erstes Element
- 32: Innenwand
- 34: Führung
- 36: Außenwand
- 38: Führung
- 40: Halteelement
- 42: Haken
- 50: zweites Element
- 52: Innenwand
- 54: Außenwand
- 56: Führung
- 58: Rand
- 60: Öffnung
- 62: Öffnung
- 70: drittes Element
- 72: Innenwand
- 74: Führung
- 76: Rand
- 78: Öffnung
- 80: Koppeleinrichtung
- 82: Koppelelement
- 84: Basis
- 86: Koppelabschnitt
- 90: Bedienelement
- 92: Riffelung
- 94: Vorsprung
- 96: Rastelement
- 98: Öffnung
- 100: Einsatz

## Patentansprüche

1. Getränkehalter, aufweisend ein erstes zylinderförmiges Element (30), welches an seiner Innenwand (32) und an seiner Außenwand (36) eine gewindeartige Führung (34, 38) aufweist, ein zweites zylinderförmiges Element (50), welches eine mit einer der gewindeartigen Führungen (34) des ersten Elements (30) korrespondierende gewindeartige Führung (56) aufweist, und ein drittes zylinderförmiges Element (70), welches eine mit der anderen gewindeartigen Führung (38) des ersten Elements (30) korrespondierende gewindeartige Führung (74) aufweist, wobei
- das zweite Element (50) und das dritte Element (70) über die gewindeartigen Führungen (34, 38, 56, 74) relativ zu dem ersten Element (30) um eine gemeinsame Drehachse verdrehbar sind,
- das zweite Element (50) und das dritte Element (70) über eine Koppeleinrichtung (80) derart miteinander gekoppelt sind, dass das zweite Element (50) und das dritte Element (70) gemeinsam in der gleichen Richtung um die gemeinsame Drehachse verdrehbar sind, und
- die Position des zweiten Elements (50) und des dritten Elements (70) zueinander über die Koppeleinrichtung (80) fest definiert ist.

2. Getränkehalter nach Anspruch 1, wobei das zweite Element (50) an seiner Außenwand (54) eine mit der gewindeartigen Führung (34) an der Innenwand (32) des ersten Elements (30) korrespondierende gewindeartige Führung (56) und das dritte Element (70) an seiner Innenwand (72) eine mit der gewindeartigen Führung (38) an der Außenwand (36) des ersten Elements (30) korrespondierende gewindeartige Führung (74) aufweisen.

3. Getränkehalter nach Anspruch 1 oder 2, wobei das zweite Element (50) einen umlaufenden Rand (58) aufweist, über den das zweite Element (50) in einer Endstellung auf dem ersten Element (30) aufliegt.

4. Getränkehalter nach einem der Ansprüche 1 bis 3, wobei die Koppeleinrichtung (80) mindestens ein Koppelelement (82) aufweist, welches sich parallel zur Drehachse des erstes, zweiten und dritten Elements (30, 50, 70) erstreckt, wobei das mindestens eine Koppelelement (82) mit dem zweiten Element (50) verbunden ist.

5. Getränkehalter nach einem der Ansprüche 1 bis 4, wobei das dritte Element (70) mindestens eine Öffnung (78) aufweist, in welcher ein Koppelelement (82) der Koppeleinrichtung (80) verschiebbar geführt ist.

6. Getränkehalter nach einem der Ansprüche 1 bis 5, aufweisend ein Gehäuse (12) mit einer Öffnung (14), in welcher das erste Element (30) eingesetzt und verdrehfest mit dem Gehäuse (12) verbunden ist.

7. Getränkehalter nach Anspruch 6, wobei das erste Element (30) mindestens ein radial nach außen ragendes Halteelement (40) aufweist, das in mindestens einer korrespondieren Öffnung (22; 24) in einer die Öffnung (14) des Gehäuses (12) umgebenden Wand (16) aufgenommen ist.

8. Getränkehalter nach Anspruch 6, wobei das mindestens eine Koppelelement (82) im eingefahrenen Zustand des zweiten Elements (50) und des dritten Elements (70) zwischen der Außenwand des dritten Elements (70) und der die Öffnung (14) des Gehäuses (12) umgebenden Wand (16) angeordnet ist.

9. Getränkehalter nach einem der Ansprüche 6 bis 8, wobei das Gehäuse (12) eine umlaufende Rinne (20) aufweist, die zwischen der die Öffnung (14) des Gehäuses (12) umgebenden Wand (16) und einer beabstandet hierzu sich erstreckenden Wand (18) gebildet ist.

10. Getränkehalter nach einem der Ansprüche 1 bis 9, wobei
- das dritte Element (70) einen Boden aufweist, und/oder
- das zweite Element (50) verdrehfest mit einem Bedienelement (90) verbunden ist, welches an seiner äußeren Oberfläche mindestens abschnittsweise eine Struktur oder Riffelung (92) aufweist.

## Claims

1. Drinks holder, comprising a first cylindrical element (30), which has a thread-like guide (34, 38) at its inner wall (32) and at its outer wall (36), a second cylindrical element (50), which has a thread-like guide (56) corresponding with one of the thread-like guides (34) of the first element (30), and a third cylindrical element (70), which has a thread-like guide (74) corresponding with the other thread-like guide (38) of the first element (30), wherein
- the second element (50) and the third element (70) are rotatable relative to the first element (30) about a common axis of rotation by way of the thread-like guides (34, 38, 56, 74)
- the second element (50) and the third element (70) are so coupled together by way of a coupling device (80) that the second element (50) and the third element (70) are rotatable together in the same direction about the common axis of rotation and
- the position of the second element (50) and of the third element (70) relative to one another is fixedly defined by way of the coupling device (80).

2. Drinks holder according to claim 1, wherein the second element (50) has at its outer wall (54) a thread-like guide (56) corresponding with the thread-like guide (34) at the inner wall (32) of the first element (30) and the third element (70) has at its inner wall (72) a thread-like guide (74) corresponding with the thread-like guide (38) at the outer wall (36) of the first element (30).

3. Drinks holder according to claim 1 or 2, wherein the second element (50) has an encircling edge (58) by way of which the second element (50) in an end setting rests on the first element (30).

4. Drinks holder according to any one of claims 1 to 3, wherein the coupling device (80) has at least one coupling element (82) which extends parallel to the axis of rotation of the first, second and third elements (30, 50, 70), wherein the at least one coupling element (82) is connected with the second element (50).

5. Drinks holder according to any one of claims 1 to 4, wherein the third element (70) has at least one opening (78) in which a coupling element (82) of the coupling device (80 is guided to be displaceable.

6. Drinks holder according to any one of claims 1 to 5, comprising a housing (12) with an opening (14) into which the first element (30) is inserted and in which it is connected with the housing (12) to be secure against relative rotation.

7. Drinks holder according to claim 6, wherein the first element (30) has at least one radially outwardly projecting holding element (40) which is received in at least one corresponding opening (22; 24) in a wall (16) surrounding the opening (14) of the housing (12).

8. Drinks holder according to claim 6, wherein the at least one coupling element (82) in the moved-in state of the second element (50) and of the third element (70) is arranged between the outer wall of the third element (70) and the wall (16) surrounding the opening (14) of the housing (12).

9. Drinks holder according to any one of claims 6 to 8, wherein the housing (12) has an encircling channel (20) formed between the wall (16), which surrounds the opening (14) of the housing (12), and a wall (18) extending at a spacing therefrom.

10. Drinks holder according to any one of claims 1 to 9, wherein
- the third element (70) has a base and/or
- the second element (50) is connected with a control element (90), which at its outer surface has, at least in a section, a structure or ribbing (92) to be secure against relative rotation.

## Revendications

1. Porte-boisson présentant un premier élément cylindrique (30) qui présente au niveau de sa paroi intérieure (32) et au niveau de sa paroi extérieure (36) un guidage de type filetage (34, 38), un deuxième élément cylindrique (50) qui présente un guidage de type filetage (56) correspondant à un des guidages de type filetage (34) du premier élément (30), et un troisième élément cylindrique (70) qui présente un guidage de type filetage (74) correspondant à l'autre guidage de type filetage (38) du premier élément (30), dans lequel
- le deuxième élément (50) et le troisième élément (70) peuvent tourner par le biais des guidages de type filetage (34, 38, 56, 74) par rapport au premier élément (30) autour d'un axe de rotation commun,
- le deuxième élément (50) et le troisième élément (70) sont couplés par le biais d'un dispositif d'accouplement (80) l'un à l'autre de telle manière que le deuxième élément (50) et le troisième élément (70) puissent tourner conjointement dans la même direction autour de l'axe de rotation commun, et
- la position du deuxième élément (50) et du troisième élément (70) est définie fixement l'un par rapport à l'autre par le biais du dispositif d'accouplement (80).

2. Porte-boisson selon la revendication 1, dans lequel le deuxième élément (50) présente au niveau de sa paroi extérieure (54) un guidage de type filetage (56) correspondant au guidage de type filetage (34) au niveau de la paroi intérieure (32) du premier élément (30) et le troisième élément (70) présente au niveau de sa paroi intérieure (72) un guidage de type filetage (74) correspondant au guidage de type filetage (38) au niveau de la paroi extérieure (36) du premier élément (30).

3. Porte-boisson selon la revendication 1 ou 2, dans lequel le deuxième élément (50) présente un bord tournant (58) par le biais duquel le deuxième élément (50) repose dans une position d'extrémité sur le premier élément (30).

4. Porte-boisson selon l'une des revendications 1 à 3, dans lequel le dispositif d'accouplement (80) présente au moins un élément d'accouplement (82) qui s'étend parallèlement à l'axe de rotation des premier, deuxième et troisième éléments (30, 50, 70), dans lequel l'au moins un élément d'accouplement (82) est raccordé au deuxième élément (50).

5. Porte-boisson selon l'une des revendications 1 à 4, dans lequel le troisième élément (70) présente au moins une ouverture (78) dans laquelle un élément d'accouplement (82) du dispositif d'accouplement (80) est guidé de manière coulissante.

6. Porte-boisson selon l'une des revendications 1 à 5, présentant un boîtier (12) avec une ouverture (14) dans laquelle le premier élément (30) est inséré et raccordé sans pouvoir tourner au boîtier (12).

7. Porte-boisson selon la revendication 6, dans lequel le premier élément (30) présente au moins un élément de retenue (40) dépassant radialement vers l'extérieur qui est reçu dans au moins une ouverture correspondante (22 ; 24) dans une paroi (16) entourant l'ouverture (14) du boîtier (12).

8. Porte-boisson selon la revendication 6, dans lequel l'au moins un élément d'accouplement (82) est agencé dans l'état rentré du deuxième élément (50) et du troisième élément (70) entre la paroi extérieure du troisième élément (70) et la paroi (16) entourant l'ouverture (14) du boîtier (12).

9. Porte-boisson selon l'une des revendications 6 à 8, dans lequel le boîtier (12) présente une rainure tournante (20) qui est formée entre la paroi (16) entourant l'ouverture (14) du boîtier (12) et une paroi (18) s'étendant à distance de celle-ci.

10. Porte-boisson selon l'une des revendications 1 à 9, dans lequel
- le troisième élément (70) présente un fond, et/ou
- le deuxième élément (50) est raccordé sans pouvoir tourner à un élément de commande (90) qui présente au niveau de sa surface extérieure au moins par section une structure ou cannelure (92).
